# EUROPEAN PATENT SPECIFICATION

(11) **EP 4 376 195 B1**
(45) Date of publication and mention of the grant of the patent: **18.06.2025**
(21) Application number: 22209076.3
(22) Date of filing: 23.11.2022
(51) Int. Cl.: H01M 50/342, H01M 10/613, H01M 50/103, H01M 50/209, H01M 50/242, H01M 10/625, H01M 10/6556

(54) **BATTERY CELL AND BATTERY MODULE CONFIGURED FOR STOPPING THERMAL PROPAGATION**
BATTERIEZELLE UND BATTERIEMODUL MIT KONFIGURATION ZUM STOPPEN DER WÄRMEAUSBREITUNG
ÉLÉMENT DE BATTERIE ET MODULE DE BATTERIE CONFIGURÉ POUR ARRÊTER LA PROPAGATION THERMIQUE

(43) Date of publication of application: 29.05.2024
(73) Proprietor: Samsung SDI Co., Ltd., Yongin-si, Gyeonggi-do 17084 (KR)
(72) Inventor: Parz, Peter, 8111 Gratwein (AT); Kondor, Istvan, 8141 Bierbaum (AT); Killmann, Jörg, 8010 Graz (AT)
(74) Representative: Gulde & Partner

(56) References cited:
- DE-A1- 102017 212 223
- US-A1- 2013 059 175
- US-A1- 2016 293 926

## Description

### Field of the Disclosure

The present disclosure relates to a battery cell for a battery module as well as to a battery module, and in particular to a battery cell and a battery module, which are configured for inhibiting thermal propagation within a battery module. The disclosure is further related to a battery system comprising one or more of such battery cells according and/or one or more of such battery modules. Further, the disclosure refers to a vehicle comprising at least one such battery module and/or at least one such battery system.

### Technological Background

In the recent years, vehicles for transportation of goods and people have been developed using electric power as a power source, and in particular, as a power source for motion. Such an electric vehicle is an automobile that is propelled by an electric motor, using energy stored in rechargeable batteries. An electric vehicle may be solely powered by batteries or may be a form of hybrid vehicle additionally powered by, for example, a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used in particular as a power supply for electric and hybrid vehicles.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e. g., cylindrical or prismatic (such as a prism with a rectangular or hexagonal base), depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle or fully electric vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. The battery modules may comprise submodules with a plurality of stacked battery cells, and each stack comprising cells connected in parallel that are connected in series (*XpYs*) or cells connected in series that are connected in parallel (*XsYp*)*.*

A battery pack is a set of any number of (usually identical) battery modules. The battery modules may be configured in series, parallel or a mixture of both to deliver the desired voltage and capacity. Components of battery packs include the individual battery modules and the interconnects, which provide electrical conductivity between them.

A battery system further includes a battery management system (BMS), which is any electronic system that manages the rechargeable battery, battery module and battery pack, such as by protecting the batteries from operating outside their safe operating limits, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), electrical current, temperature (such as average temperature of the battery pack or battery modules, coolant intake temperature, coolant output temperature, or temperatures of individual cells), coolant flow (such as flow rate, cooling liquid pressure), and/or coolant current.

A BMS may protect the battery pack from operating outside its safe operating limits. Operation outside the safe operating limits may be indicated by over-current, over-voltage (during charging), over-temperature, under-temperature, over-pressure, and ground fault or leakage current detection. The BMS may prevent operation outside the battery's safe operating limits by including an internal switch (such as a relay or solid-state device) which is opened if the battery is operated outside its safe operating conditions. Thereby, the BMS may request the devices, to which the battery is connected, to reduce or even terminate using the battery, and actively controlling the environment, such as through heaters, fans, air conditioning or liquid cooling.

The mechanical integration of such a battery pack requires appropriate mechanical connections between the individual components, e. g., of battery modules, and between them and a supporting structure of the vehicle. These connections must remain functional and safe during the average service life of the battery system. Furthermore, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Moreover, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by, for example, bolts passing through the carrier framework of the battery pack. The framework is usually made of aluminum or an aluminum alloy to lower the total weight of the construction.

To provide thermal control of the battery pack, an active or passive thermal management system is required to safely use the pack. This can be achieved by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus, charging and discharging performance of the rechargeable batteries deteriorates and their life-span shortened. Thus, cell cooling for effectively emitting/discharging/dissipating heat from the cells is required.

Exothermic decomposition of cell components may lead to the so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defective electrical contact, short circuit to a neighboring cell. During the thermal runaway, a failed battery cell, i.e., a battery cell which has a local failure, may reach a temperature exceeding 700°C. Meanwhile, large quantities of hot gas are ejected from inside of the failed battery cell through a vent opening of a cell housing into the battery pack. The main components of the vented gas are H₂, CO₂, CO, electrolyte vapor and other hydrocarbons. The vented gas is therefore flammable and potentially toxic. The vented gas also causes a gas-pressure increase inside the battery pack.

It is a well-documented fact that Li-ion batteries can experience thermal runaway. The thermal runaway may be initiated by an internal short circuit within the battery cell, then causing the battery cell to rapidly heat up. The contained electrolyte evaporates, thus increasing internal pressure, which in turn opens the venting valve of the battery cell such that the battery cell starts venting. As the internal heating continues, the internal parts of the battery cell melt and are ejected together with the venting gas. Eventually, the entire cell can may melt down.

The term "thermal propagation" denotes the event when the thermal runaway of one battery cell initiates thermal runaway in one or more other battery cells. This may lead to a chain reaction, in the course of which the entire battery pack and, possibly, its surrounding (e. g., a vehicle) burn down.

Tests on new battery cell generations show that very high temperatures (over 1000 °C) are generated and thermal energy in the range of 1 MJ is set free. Experiments show that a short-term thermal energy input of 60 kJ is sufficient to start another thermal event in a neighboring battery cell. Furthermore, due to the high gas pressure during thermal runaway, major parts of the electrode stack (jelly roll) of the battery cell may be ejected from the battery cell. These electric conductive parts may lead to short circuits and arcs inside a closed battery pack. This, in turn, may initiate the thermal runaway of other battery cells, thus leading to thermal propagation and, finally, the complete destruction of the battery.

The above-described processes may lead, in the prior art, to the total destruction of a battery pack, the total destruction of a vehicle equipped with the battery pack, and thus implies a high risk for safety of people in the vicinity of the battery pack.

There is thus a need to provide means in order to inhibit thermal propagation or at least to considerably reduce the probability (risk) of thermal propagation. In particular, there is a need for a battery cell, a battery module, and a battery pack that allows for inhibiting thermal propagation or at least for considerably reducing the probability (risk) of thermal propagation. Also, there is a need for vehicles, in which thermal propagation in its power sources is inhibited or the risk for the occurrence of thermal propagation in its power sources is at least considerably reduced.

US2016293926A1 discloses a battery cell having a prismatic housing with a terminal side and a venting side which are different from each other, the venting area extending over 30% of the venting side area. Furthermore, D1 discloses a battery module and battery system with a plurality of battery cells as described above. The cells are arranged in such a way that the venting sides of all cells face in the same direction. A cooling plate in which a cooling medium flows is arranged on a side of the module facing in a different direction.

DE102017212223A1 discloses a battery module having a trough that serves the dual functions of collecting battery ejecta as well serving as a bollard protection plate.

US2013059175A1 discloses a battery module having a trough for the same purpose and teaches that arranging a safety vent and the trough at a cell bottom enables to make use of the force of gravity in order to eject the emerging substances.

It is thus an object of the present disclosure as defined by the independent claims to overcome or reduce at least some of the drawbacks of the prior art and, in particular, to provide a battery cell, a battery module, and a battery pack that allows for inhibiting thermal propagation or at least for considerably reducing the probability (risk) of thermal propagation. It is a further object of the present disclosure to provide a vehicle, in which thermal propagation in its power sources is inhibited or the risk for the occurrence of thermal propagation in its power sources is at least considerably reduced.

### Summary of Invention

The invention is defined by the appended claims. The description that follows is subjected to this limitation. Any disclosure lying outside the scope of said claims is only intended for illustrative as well as comparative purposes.

According to a first aspect of the present disclosure, a battery cell comprises: a housing having a prismatic shape; an electrode assembly fixedly arranged inside the housing; wherein the housing comprises a venting side and at least one terminal side being different from the venting side; wherein at least one terminal is arranged on each of the terminal sides; wherein the venting side comprises venting valve; wherein the venting valve is configured for being in a closed state and in an open state and is further configured for switching between the closed state and the open state; and wherein the venting valve, when being in the open state, provides a vent opening in the venting side, the vent opening extending over at least 70 % of the area of the venting side. The electrode assembly is fixed inside the battery cell by an anchorage, and the electrode assembly is configured for sliding or being slid through the venting opening, when the venting valve is in an open state and the electrode assembly has been detached from the anchorage.

According to a second aspect of the present disclosure, a battery module comprises: a plurality of battery cells, each of the battery cells being a battery cell according to the first aspect, wherein, with regard to a first predefined direction, each battery cell is arranged such that the venting side of the battery cell faces into the first predefined direction.

According to a third aspect of the present disclosure, a battery system comprises: one or more battery cells according to the first aspect; and/or one or more battery modules according to the second aspect.

According to a fourth aspect of the present disclosure, a vehicle comprises: at least one battery module according to the second aspect; and/or at least one battery system according to the third aspect.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: provides a schematic perspective view of a typical battery cell according to the state of the art.
- Figs. 2A and 2B: schematically illustrate a top view and a cross-sectional view of the battery cell according to the state of the art shown in Fig. 1.
- Figs. 3A and 3B: schematically illustrate a cross-sectional view and a bottom view of an exemplary embodiment of the battery cell according to the present disclosure.
- Fig. 4: is a schematic illustration of the processes within a battery module according to the state of the art, when a thermal event occurs in one of the battery cells.
- Fig. 5: is a schematic illustration of the processes within a battery module according to the present disclosure, when a thermal event occurs in one of the battery cells.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

In the following description of embodiments of the present disclosure, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

Herein, the terms "upper" and "lower" are defined according to the x-axis of a Cartesian coordinate system, wherein the x-axis is oriented downwards. For example, an upper cover is positioned at a lower part of the x-axis, whereas a lower cover is positioned at an upper part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e. g., rotated 90 degrees or at other orientations) and the spatially relative descriptors used herein should be interpreted accordingly.

In the following description of embodiments of the present disclosure, the terms of a singular form may include plural forms unless the context clearly indicates otherwise.

Features of the disclosed concept and methods of accomplishing the same may be understood more readily by reference to the following detailed description of embodiments and the accompanying drawings. Hereinafter, example embodiments will be described in more detail with reference to the accompanying drawings. The subject-matter of the present disclosure, however, may be embodied in various different forms, and should not be construed as being limited to only the illustrated embodiments herein. Rather, these embodiments are provided as examples so that this disclosure will be thorough and complete and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof will not be repeated.

The electronic or electric devices and/or any other relevant devices or components according to embodiments of the present disclosure described herein may be implemented utilizing any suitable hardware, firmware (e. g., an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e. g., on a PCB or another kind of circuit carrier. The conducting elements may comprise metallization, e. g., surface metallizations and/or pins, and/or may comprise conductive polymers or ceramics. Further electrical energy might be transmitted via wireless connections, e. g., using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as a random-access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to a first aspect of the present disclosure, a battery cell comprises: a housing having a prismatic shape; an electrode assembly fixedly arranged inside the housing; wherein the housing comprises a venting side and at least one terminal side being different from the venting side; wherein at least one terminal is arranged on each of the terminal sides; wherein the venting side comprises venting valve; wherein the venting valve is configured for being in a closed state and in an open state and is further configured for switching between the closed state and the open state; and wherein the venting valve, when being in the open state, provides a vent opening in the venting side, the vent opening extending over at least 70 % of the area of the venting side. The electrode assembly is fixed inside the battery cell by an anchorage, and the electrode assembly is configured for sliding or being slid through the venting opening, when the venting valve is in an open state and the electrode assembly has been detached from the anchorage.

The term "prismatic shape" with reference to the housing of the battery cell shall denote that the outer surface or outer appearance of the battery cell housing exhibits the geometric form of a prism or essentially the form of a prism. For example, the (outer surface or appearance of the) housing may have a cuboid shape, i. e., the shape of a right prism having a rectangular basis. However, alternatively, the housing may have the shape of a prism (right) prism with a hexagonal basis. However, the housing may alternatively exhibit other shapes, as long as these shapes are prismatic or essentially prismatic. For example, an essentially prismatic battery cell housing may have beveled or rounded edges (instead of sharp edges) and/or beveled or rounded corners (instead of sharp corners). Preferably, the shape of the housing corresponds to the shape of a right prisms, i. e., prisms, in which the joining edges and surfaces of the side faces are perpendicular to the bases. However, in alternative embodiments, the shape of the housing may correspond to other prims than right prisms.

The term "electrode assembly" shall refer to an electrode stack (i. e., a jelly roll). However, the electrode assembly may further be equipped with electric connections configured to connect with terminals, which may be arranged on the terminal sides of the battery cell.

In embodiments (see below), the venting valve may open more than 15 % of the area of the venting side, when being in the open state.

The venting valve may be configured for being in the open state or switching into the open state, if the pressure inside the battery cell exceeds a certain predefined value, and to remain or switch into the closed state otherwise.

The pressure inside the battery cell may be a gas pressure (in particular, the pressure of vaporized electrolytes) and/or a pressure of molten material (in particular, molten parts of the jelly roll). In the following, a pressure exceeding the predefined value is referred to as "overpressure."

In one embodiment of the battery cell according to the first aspect of the present disclosure, the venting side is configured to be a bottom side of the battery cell.

The term "bottom side" shall refer to that side of the prismatic battery cell housing that is configured for facing downwards, i. e., in the direction of the gravity force.

Accordingly, the battery cell may be in particular configured to be used in an orientation in space, wherein the venting side faces downwards, i. e., in the direction of the gravity force.

Then, when the battery cell is held or arranged in an orientation, wherein the venting side is the bottom side, the gravity force acts as a force exerted on any material passing through the vent opening, having the effect that the ejection of material through the venting opening is improved. This applies irrespectively of the state of the material, i. e., regardless of whether the material is in a solid state, a liquid state, or a gas state.

In embodiments, the venting side may be planar or essentially planar and arranged perpendicular to a first direction. Then, when the battery cell is held or arranged in an orientation, wherein the venting side is the bottom side, the first direction may correspond or be parallel to the direction of the gravity force.

The housing may comprise a first lateral side and a second side. The first lateral side and the second lateral side may each be planar or essentially planar. The first lateral side and the rear lateral may be shaped congruently to each other. The first lateral side and the second lateral side may each have a rectangular shape.

In embodiments, the first lateral side and the second lateral side may each extend perpendicular to a second direction oriented non-parallel to the first direction. The second direction may be oriented perpendicular to the first direction.

Further, the housing may comprise a front side and a rear side. The front side and the rear side may each be planar or essentially planar. The front side and the rear side may be shaped congruently to each other. The front side and the rear side may each have a rectangular or a hexagonal shape. The front side may be configured to abut to a rear side of a further battery cell being shaped identically to the battery cell as described before. The front side may be configured to be fixed (e. g., by an adhesive material) to the rear side of another battery cell. Similarly, the rear side of the battery cell may be configured to abut to a front side of a further battery cell being shaped identically to the battery cell as described before. The rear side may be configured to be fixed (e. g., by an adhesive material) to the front side of another battery cell.

In embodiments, the front side and the rear side may each extend perpendicular to a third direction being oriented non-parallel to the first direction and non-parallel to the second direction. The third direction may be oriented perpendicular to the first direction. The third direction may be oriented perpendicular to the second direction. The third direction may be oriented perpendicular to the first direction and the second direction.

In one embodiment of the battery cell according to the first aspect, the vent opening is configured for letting pass molten material and particles from the inside of the battery cell to the outside of the battery cell.

Here and in the following, the term "inside of the battery cell" has the meaning of "inside the housing of the battery cell." Correspondingly, the term "outside the battery cell" shall have the meaning of "outside the housing of the battery cell."

Then, in case of a thermal event such as a thermal runaway, any molten material, vent gas and/or particles entrained with the molten material and/or the vent gas can be ejected from the inside of the battery housing to the outside of the battery housing through the venting opening, the ejection being caused by the pressure generated inside the battery cell in case of a thermal event. When the battery cell, during use and thus during the thermal event, is oriented such that the venting side faces downwards, i. e., in the direction of the gravity force, any molten material, vent gas and/or particles entrained with the molten material and/or the vent gas becomes ejected from the battery cell's inside not only due to the internal pressure of the battery cell, but also by the gravity force. In embodiments described in more detail below, also parts of material of the electrode assembly, which have detached from their fixed arrangement within the battery cell housing, may be ejected to the venting opening.

In one embodiment of the battery cell according to the first aspect, the vent opening is configured for letting pass parts of the electrode assembly mechanically detached from the inside of the battery cell to the outside of the battery cell.

The term "detached parts" of the electrode assembly shall refer to parts of the electrode assembly, which are not molten (i. e., in a solid state) in case of a thermal event but have detached from the fixed arrangement inside the battery cell housing and/or have detached from other parts of the electrode assembly, by which they have been held in a fixed position in the original state of the battery cell. The original state of the battery cell may be defined, here and in the following, as a state, in which no thermal event has yet occurred in the battery cell.

In embodiments, the anchorage may comprise one or more brackets or bracings. For example, the outer surface of parts of the electrode assembly being in fixed connection with the anchorage may become at least partly fused due to the temperature and/or the pressure generated inside the battery cell housing such that the fixed connection of the electrode assembly to the anchorage is loosened. Then, in case of a thermal event, the battery assembly is configured for being ejected through the vent opening provided by the opened venting valve. The ejection may in particular be caused by the (over-)pressure inside the battery cell housing and/or by gravity.

It suffices that the electrode assembly, or at least (solid and/or molten) parts of the electrode assembly, fit in one direction through the venting opening provided by the venting valve when being in the open state. This direction may be a direction parallel to a straight line running through the vent opening as well as through the electrode assembly, when the battery cell is in an original state.

In one embodiment of the battery cell according to the first aspect, the venting valve, when being in an open state, provides a venting opening that opens, for example, at least 80% or preferably at least 90% of the area of the venting side.

Then, large parts of the electrode assembly (i. e., the jelly roll / stack) can be ejected from the interior of the battery cell such that heat conduction to the neighboring cells is prevented. Also, the larger the area opened by the venting valve when being in the open state, the higher is the probability that major parts of the electrode assembly (being destroyed by thermal runaway) are able to drop out of the battery cell through the venting valve.

The area of the venting side being opened by the venting valve when being in an open state may be a centered area of the venting side. For example, when the venting side extends along the second direction perpendicular to the first and second lateral sides (see above), the opened area may be centered on the venting side with respect to the second direction. Then, the remaining non-open portions of the area of the venting side are adjacent to each of the edges of the venting side formed with one of the lateral sides.

In embodiments, the non-open portions of the venting side may be configured as supporting areas, by which the battery cell housing may be mechanically supported when being placed or arranged in a battery module (see below).

In one embodiment of the battery cell according to the first aspect, the venting valve, when being in an open state, provides a venting opening that opens the venting side to 100% or at least between 98% and 100%.

In those embodiments of the battery cell, the venting opening provides a maximally opened area of the venting side being possible in a design according to the first aspect of the present disclosure.

In one embodiment of the battery cell according to the first aspect, the housing comprises two terminal sides being arranged as opposite sides of the housing.

In embodiments, the two terminal sides may in particular be the lateral sides (see above) of the battery cell housing. In other words, a first terminal side may correspond to the first lateral side, and a second terminal side may correspond to the second terminal side. In alternative embodiments, however, a first terminal side may correspond to one of the lateral sides of the housing, and a second terminal side may correspond to a side of the housing being arranged opposite to the venting side with respect to the housing.

In one embodiment of the battery cell according to the first aspect, one side of the battery housing is a cooling side being configured to be cooled by an external cooling means.

Then, in those embodiments, the battery cell can be cooled by the external cooling means.

The cooling side of the battery housing may be made of or at least comprise a material having a high heat conductivity.

The cooling side may not be identical with the venting side and also not identical with each of the terminal sides. For example, the terminal side may correspond to the lateral sides of a battery cell (see above), and the cooling side may then correspond to the side of the housing being arranged opposite to the venting side with respect to the housing. Alternatively, however, the cooling side may correspond to one of the lateral sides, and one of terminal sides may correspond to the other one of the lateral sides, while the other one of the terminal sides may correspond to the side arranged opposite to the housing.

According to a second aspect of the present disclosure, a battery module comprises: a plurality of battery cells, each of the battery cells being a battery cell according to the first aspect and/or one of the embodiments of the first aspect, wherein, with regard to a first predefined direction, each battery cell is arranged such that the venting side of the battery cell faces into the first predefined direction.

Then, in other words, the venting sides of the battery cells (each of the battery cells according to the first aspect or one of the embodiments of the first aspect) face into the same (predefined) direction. Then, for each of the battery cells comprised in the battery module, the first direction as defined in the context of embodiments according to the first aspect of the present disclosure (see above) corresponds to the first predefined direction as defined in the context of the second aspect of the disclosure. Then, in embodiments, the venting side of each battery cell may be arranged, in the battery module, perpendicular to the first direction. Then, when the battery module is oriented (e. g., held, arranged, mounted, and the like) in space such that the first direction (as well as the first predefined direction) corresponds to the direction of the gravity force, the venting sides of each of the battery cells comprised in the battery module face downwards.

In a battery module according to the second aspect of the present disclosure, thermal propagation (as to the term "thermal propagation", see the introductory part of this disclosure) is inhibited or, at least, the risk of thermal propagation is considerably reduced. The underlying concepts can be summarized as:
- improving the removal of generated heat from the vicinity of battery cells; and
- ensuring that particle ejecta cannot come in contact with other battery cells.

Thus, the proposed battery module according to the second aspect inhibits thermal propagation by geometric design, and in particular avoids:
- total destruction of the battery module or a battery pack comprising the battery module (see below),
- total destruction of vehicle,
- high risk for safety of people in the vicinity of the battery module and/or battery pack.

Some of the effects provided by the battery module according to the second aspect can be summarized as follows: Due to changing the design of the battery cell (venting and terminal positioning) in comparison to the state of the art, in the case of a thermal event, the hot electrode stack (i. a., the jelly roll) is ejected from the battery cell housing to a safe environment and is therefore no longer in contact with neighboring battery cells. Consequently, heat transfer is interrupted, and other battery cells cannot go into thermal runaway.

A container (trough) collects the (parts of the) electrode stack (such as the jelly roll) at the bottom of the module. In embodiments, the container / trough can also act as a bollard protection plate (see below).

In embodiments, the battery cells have terminals to the lateral sides, and can therefore be cooled from the top side. At the bottom side of the battery cells, there is a large Venting area, so that the electrode stack (i. a., the jelly roll) can fall out in the case of a thermal event.

In embodiments of the battery module according to the second aspect, each of the lateral sides of each of the battery cells may be arranged perpendicular to a second direction non-parallel (e. g., perpendicular) to the first direction. In those embodiments of the battery module, each battery cell may comprise lateral sides each being configured as a terminal side (see a detailed description of those embodiments of a battery cell above in the context of embodiments of the first aspect).

In embodiments of the battery module, the battery cells may be arranged in at least one battery cell stack extending non-parallel to the first predefined direction. For example, in each of the at least one battery cell stacks, the battery cells may be arranged consecutively along a third direction non-parallel (e. g., perpendicular) to the first direction and non-parallel (e. g., perpendicular) to the second direction. In a stack, the venting sides of each of the battery cell stack may be arranged on the same (virtual) plane. In embodiments of the battery module, the venting sides of each of the battery cells may be arranged on the same (virtual) plane.

In one embodiment of the battery module according to the second aspect, the battery module further comprises one or more troughs, wherein, for each of the battery cells, one of the one or more troughs extends parallel to the venting side of the battery cell, is positioned in front of the venting side of the battery cell, and is arranged spaced apart, with regard to the first predefined direction, from the venting side of the battery cell.

Each of the troughs or at least an area of the each of the troughs may have a planar or essentially planer shape. In embodiments of the battery module, wherein each of the venting sides is oriented perpendicular to the first direction (see above), the troughs may each be also arranged perpendicular to the first direction.

For example, in embodiments of the battery module, wherein venting side of each battery cell is arranged perpendicular to a first direction (see above), the one or more troughs are arranged below the venting sides, when the battery module is oriented (e. g., held, arranged, mounted, and the like) in space such that the first direction corresponds to the direction of the gravity force. Then, in case of the occurrence of a thermal event in one or more of the battery cells, the venting valves of the battery cells affected by the thermal event may open and, due to the (over-)pressure inside the affected battery cells and the gravitational force, particles, molten parts or detached parts of the electrode assembly inside each of the affected battery cells may be ejected out of the battery cells and fell down onto the (at least one) trough. In other words, solid or liquid parts of the ejecta are then collected on the at least one trough below the plurality of battery cells and may remain and cool down there.

Further, in such embodiments, the troughs may then be spaced apart, with regard to the first direction, from each of the venting sides by a certain predefined distance or at least by a certain predefined distance. The distance may be chosen such that the heat generated by the ejecta collected on the at least one trough does not cause a thermal event in battery cells not yet affected by the thermal event and, further, does not drive further thermal events, which already occur in at least some (i. e., in one or more) of the battery cells. Thus, the space, where the solid and molten ejecta are collected on the one or more troughs is a "safe space" in the sense that the ejecta collected there do no longer contribute to driving or maintaining the procedure of a thermal event in the affected battery cells.

Embodiments of the battery module may comprise only a single trough, which is arranged in front of the venting sides of each of the battery cells (irrespectively of the arrangement of the battery cells in one or more stacks). In alternative embodiments, the battery module may comprise at least two battery cell stacks, and at least two troughs are used such that for each of the battery cell stacks, one of the troughs is arranged in front of the venting sides of each of the battery cells of that battery cell stack.

In one embodiment of the battery module according to the second aspect, at least some of the troughs are realized by a bollard protection plate. In embodiments, each of the troughs may be realized by a bollard protection plate.

In one embodiment of the battery module according to the second aspect, at least some of the troughs are made of a material configured to withstand high temperatures such as steel. In embodiments, each of the troughs may be made of a material configured to withstand high temperatures such as steel.

In one embodiment of the battery module according to the second aspect, the battery module further comprises a cooling means, wherein the cooling means is thermally connected to the cooling side of each of the battery cells.

Preferably, with regard to a second predefined direction having an orientation different from the orientation of the first predefined direction, the cooling side of each of the battery cells faces into the second predefined direction.

For example, in embodiments, the second predefined direction may be (anti-)parallel to the first predefined direction, while, however, the orientation of the second predefined direction is opposite to the orientation of the first predefined direction. In other words, in those embodiments, the first and the second direction may be oriented opposite to each other. Then, in those embodiments, each of the battery cells can be cooled by a cooling means, wherein the cooling means is in thermal contact with the housing (e. g., mechanically contacts or abuts against the housing) of each of the battery cells on a location opposite to the venting sides.

However, in alternative embodiments, the second predefined direction may be perpendicular to the first predefined direction. In such embodiments, the cooling means may be in thermal contact with one of the lateral sides of each of the battery cells comprised in the battery module.

In embodiments, the cooling means may comprise at least one cooling plate.

In embodiments, the cooling means may comprise a cooling channel configured for guiding a coolant through itself. In embodiments, the cooling channel may comprise a multiplicity (i. e., two or more) cooling sub-channels. The cooling channel may abut against the cooling side of each of the battery cell housings. The cooling channel may have at least one cooling channel inlet for supplying the coolant channel with a coolant (i. e., a cooling liquid) provided by an external coolant supply. Further, the coolant channel may have at least one cooling channel outlet for discharging coolant from the coolant channel into an external coolant collection device. The coolant supply and the coolant collection device may be the same device.

In embodiments, the cooling channel may be in direct thermal contact with the cooling sides of the battery cells. In alternative embodiments, the cooling channel may be in thermal contact with the at least one cooling plate, and each of the at least one cooling plate is, in turn, in thermal contact with the cooling side of at least some of the battery cells.

According to a third aspect of the present disclosure, a battery system comprises: one or more battery cells according to the first aspect or any one of the embodiments of the first aspect; and/or one or more battery modules according to the second aspect or any one of the embodiments of the second aspect.

According to a fourth aspect of the present disclosure, a vehicle comprises: at least one battery module according to the second aspect or any one of the embodiments of the second aspect; and/or at least one battery system according to the third aspect or any one of the embodiments of the third aspect.

Preferably, the vehicle is a hybrid vehicle or a fully electric vehicle.

### Specific Embodiments

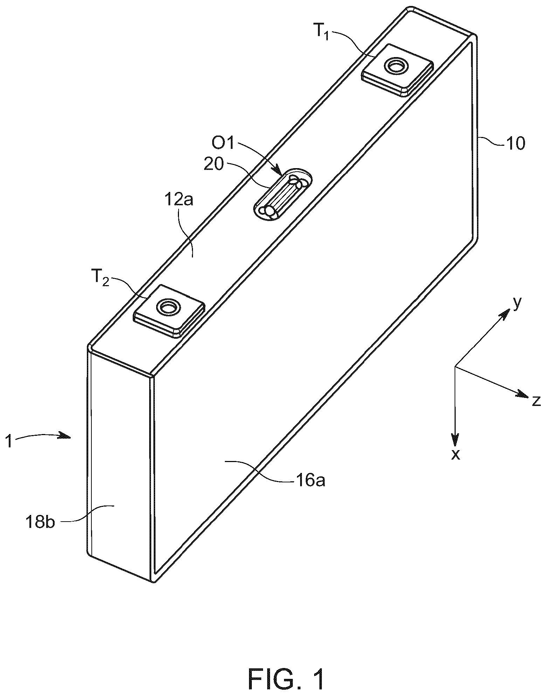

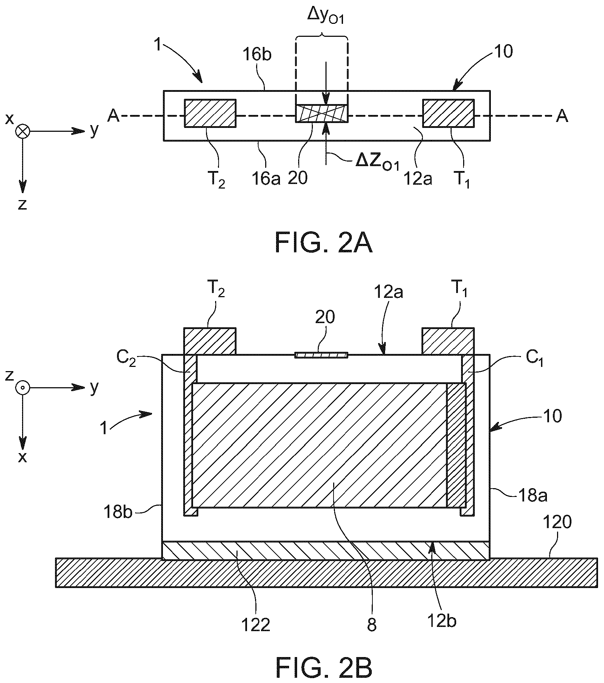

In Figures 1, 2A, and 2B, an example for the design of a typical state-of-the-art battery cell 1 used in battery systems for hybrid or fully electric vehicles is schematically illustrated with reference to a Cartesian coordinate system having the axes x, y, and z. Fig. 1 is a schematic perspective view, while Fig. 2A provides a top view and Fig. 2B is a cross-sectional cut parallel to the x-y-plane of the coordinate system along the line A - A indicated in Fig. 2A.

The battery cell 1 has a housing 10 with a prismatic (cuboid) shape. On an upper side face 12a of the housing 10 (i. e., the battery cell's upper side surface facing against the x-direction of the coordinate system), a first terminal T₁ and a second terminal T₂ are arranged. The terminals and T₁, T₂ allow for an electrical connection of the battery cell 1. The first terminal T₁ may be the negative terminal of the battery cell 1, and the second terminal T₂ may be the positive terminal of the battery cell 1. Furthermore, between the first terminal T₁ and the second terminal T₂, a venting valve 20 is arranged on the upper side face 12a. The venting valve 20 has two states, a closed state and an open state, and is configured for switching between these two states. In particular, the venting valve 20 is configured for being in the open state or switching into the open state, if the pressure inside the battery cell exceeds a certain predefined value, and to remain or switch into the closed state otherwise. In the open state, the venting valve 20 provides a vent opening O1 in the upper side 12a of the battery cell 1 depicted in Figs. 1 and 2. Thus, through the vent opening O1 provided by the open venting valve 20, vent gas can be ejected from the battery cell 1 (i. e., from the inside of the housing 10 to the outside of housing 10) in case of a thermal event occurring in the battery cell 1 such as a thermal runaway.

Inside housing 10, an electrode stack 8 (also called "jelly roll") is surrounded by an electrolyte solution. By a first electric connection C₁, the electrode stack 8 is electrically connected with the first terminal T₁, and by a second electric connection C₂, the electrode stack 8 is electrically connected with the second terminal T₂.

Due to the housing 10 of the battery cell 1 having a cuboid shape, the housing 10 further includes a bottom side 12b arranged opposite to the upper side 12a (see Fig. 2B). As can be further taken from Figs. 1, 2A, and 2B, the battery cell 1 also includes of a first lateral side 18a facing into the y-direction and a second lateral side 18b opposite to the first lateral side 18a as well as a front side 16a facing into the z-direction and a rear side 16b arranged opposite to the front side 16a.

In the illustrated example, the bottom side 12b of the housing 10 is configured as a cooling side of battery cell 1. In particular, the bottom side 12b may be made from a material of high thermal conductivity. With the bottom side 12b, the housing 10 is glued, using a thermal interface material (TIM) as an adhesive layer 122, onto a cooling plate 120. Thus, heat can be dissipated from the inside of housing 10 to the cooling plate 120 via the adhesive TIM layer 122, which provides a possibility to cool the battery cell 1.

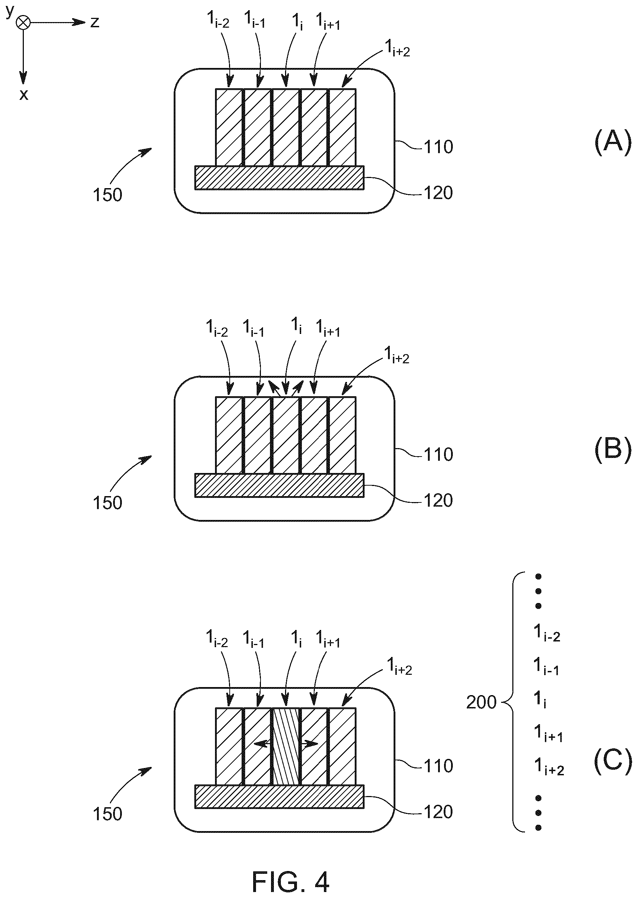

As already pointed out above in the introductory part, a battery module or battery system commonly comprises one or more stacks of battery cells. Usually, the individual battery cells of one of those stacks are shaped identically or essentially identically to each other. For example, a battery cell stack can be assembled by stacking together a plurality of battery cells each being designed like the battery cell 1 shown in Figs. 1 and 2 along a direction parallel to the axis z of the coordinate system. Then, a stack of battery cells is created like, e. g., a battery cell stack 100 comprising the battery cells 1ᵢ₋₂, 1ᵢ₋₁, 1ᵢ, 1ᵢ₊₁, and 1ᵢ₊₂ schematically depicted in Fig. 4 as a member of a battery module 150 (see below). Of course, the battery cell stack 100 may comprise more battery cells than depicted in Fig. 4, i. e., the stack of battery cells 1ᵢ₋₂, 1ᵢ₋₁, 1ᵢ, 1ᵢ₊₁, and 1ᵢ₊₂ may be continued, with regard to the orientation of Fig. 4, to the left and/or the right by a plurality of further battery cells (not shown), which may also be shaped like the battery cell 1 of Figs. 1 and 2. The terminals of the various battery cells comprised in battery cell stack 100 (see, e. g., terminals T₁ and T₂ in Figs. 1 and 2) may be electrically interconnected to each other in a suitable manner by busbars (not shown).

Figure 4 provides a rather schematic cut through a conventional battery module 150, thereby also providing a cross-sectional view along the z-axis through the battery cell stack 100 described above. However, the battery module 150 may also comprise further battery cell stacks (not shown). The battery cell stack 100 and, if applicable, the further battery cell stacks (not shown) are accommodated within a case 110 of the battery module 150. Further, the direction of the x-axis of the coordinate system also provided in Fig. 4 shall correspond to the direction of the gravitational force, i. e., in other words, the x-axis points downwards.

The directions of the axes of the coordinate system depicted in Figs. 1 and 2 and the directions of the respective axis of the coordinate system shown in Fig. 4 shall correspond to each other. Hence, each of the battery cells 1ᵢ₋₂, 1ᵢ₋₁, 1ᵢ, 1ᵢ₊₁, and 1ᵢ₊₂ is mounted such within the battery module 150 that its respective upper side 12a faces upwards, i. e., against the x-direction, and its respective bottom side 12b faces downwards, i. e., into the x-direction.

As can be seen in each of Figs. 4A - 4C, each of the battery cells 1ᵢ₋₂, 1ᵢ₋₁, 1ᵢ, 1ᵢ₊₁, 1ᵢ₊₂ of battery cell stack 100 is placed, with its respective bottom side, onto a cooling plate 120. Specifically, the bottom sides may each be glued onto the cooling plate 120 using an adhesive layer of thermal interface material (TIM) as described above with reference to Fig. 2. The cooling plate 120 may be cooled by a cooling means (not shown), e. g., a cooling channel arranged below the cooling plate 120 and being in thermal contact with the cooling plate 120. Then, the cooling plate 120 can be cooled by guiding cooling liquid (coolant) through the cooling channel. Also, the temperature of the battery cells 1ᵢ₋₂, 1ᵢ₋₁, 1ᵢ, 1ᵢ₊₁, 1ᵢ₊₂ may be supervised by suitable means such as temperature sensors connected to a BMS / BMU.

Fig. 4A shows the battery module 150 in a normal working state, i. e., in a state, wherein none of the battery cells 1ᵢ₋₂, 1ᵢ₋₁, 1ᵢ, 1ᵢ₊₁, 1ᵢ₊₂ undergoes a thermal event such as a thermal runaway. However, when a thermal event starts in one of the battery cells, for example, in battery cell 1ᵢ positioned in the center of the depicted portion of the battery cell stack 100, heat is generated such that the temperature of the electrolyte solution within the battery cell 1ᵢ rises, which finally causes the electrolyte solution to evaporate. As a consequence, the pressure inside battery cell 1ᵢ also rises and eventually, when exceeding a certain predefined value, triggers the venting valve 20 of battery cell 1ᵢ to open such that the vent gas (vaporized electrolyte solution) can escape through the vent opening O1 provided by the opened venting valve 20 to the outside of battery cell 1ᵢ (note that battery cell 1ᵢ is assembled according to the scheme of battery cell 1 of Figs. 1 and 2; thus, as to the details of the spatial arrangement of the venting valve 20 and the vent opening O1, see Figs. 1 and 2 as well as the respective description above). This is indicated in Fig. 4B by the two arrows pointing obliquely upwards from battery cell 1ᵢ.

In order to stop the thermal event occurring in battery cell 1ᵢ, the cooling performance of the cooling means cooling the cooling plate can be increased. However, as explained above in the introductory part of the description, this will no longer be sufficient for battery cells of the latest generation.

As the thermal event proceeds and the temperature further rises, not only the electrolyte evaporates, but also the electrode assembly within the battery cell 1ᵢ (i. a., the electrode stack 8 and/or the electric connections C₁, C₂) or at least parts of the electrode assembly become molten such that solid particles (e. g., graphite or copper particles) as well as molten metallic material will be entrained with the vent gas and thus also be ejected through the vent opening O1 to the outside of the housing 10 of the battery cell 1ᵢ. Outside the battery cell 1ᵢ, however, the hot particles and the hot molten metallic material seriously damages the electric installations within the battery module 150 (e. g., the busbars). Finally, the entire battery cell 1ᵢ may melt down.

Furthermore, other battery cells within the battery module 150 will likely be affected by such thermal runaway. For example, in the battery cells 1ᵢ₋₁ and 1ᵢ₊₁ being placed directly adjacent to battery cell 1ᵢ, a thermal runaway can be started caused by direct heat transfer through the abutting front and rear sides of these battery cells. This procedure is indicated in Fig. 4C by the arrows pointing horizontally from battery cell 1ᵢ to the next-neighbored battery cells 1ᵢ₋₁ and 1ᵢ₊₁. Often, this process then continues to the second-next-neighbored battery cells 1ᵢ₋₂ and 1ᵢ₊₂ and so on.

However, also other battery cells within the battery module 150 can be affected in that their respective opposite sides come into contact with the hot particles and the hot molten metallic material ejected from battery cell 1ᵢ. Finally, due to such processes, the entire battery module 150 may be destroyed and also the vehicle, into which it is implemented, may burn down.

The above remarks as to Figs. 1, 2, and 4 may be summarized as follows: The typical configuration of a battery pack currently used in electric vehicles is shown in Fig. 4. Prismatic battery cells (see Figs. 1 and 2) may have a cuboid or hexagonal can with the positive and negative terminals placed on the top side of the can. A venting valve is usually also placed on the top side of the battery cell. Those battery cells are then placed next to each other to form a battery cell stack, which may then be glued (using a thermal interface material (TIM)) to a cooling plate. The cooling plate may contain cooling channels, in which a liquid coolant is circulated to control the temperature of the battery cells. This configuration is preferred in state-of-the-art configurations because of its simplicity in construction, low manufacturing cost, and good cooling performance. However, this cooling system by itself is not sufficient to prevent/stop thermal runaway, as it cannot remove the massive amount of heat (~1 MJ) that is generated in a short time (~10 s). In case of a thermal runaway, the affected battery cell vents first only hot gas (vent gas), then also molten metallic materials, through the vent opening provided by the opened venting valve. Then, the ejecta exits upwards, where the ejecta have to navigate between the housing and electrical connectors (bus bars). Finally, the ejecta reach the venting valve of the housing and exit the battery pack to the environment.

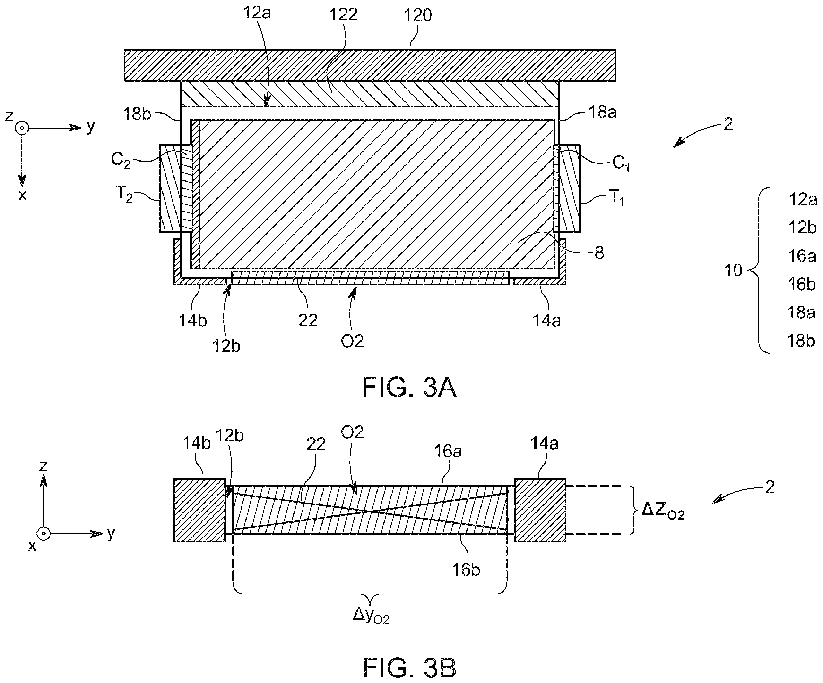

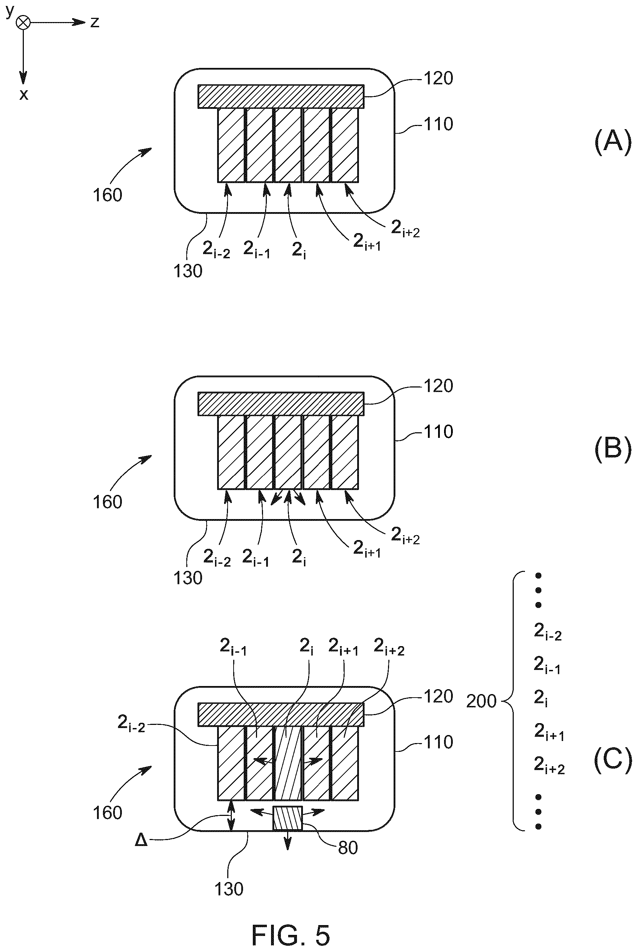

In order to prevent, in case of a thermal runaway occurring in one of the battery cells, a procedure as described in the foregoing with reference to Fig. 4, i. e., a propagation of the thermal runaway from one affected battery cell to other battery cells, a design of a battery cell as well as a design of a battery module is proposed as will be described in the following with reference to Figs. 3 and 5.

An exemplary embodiment of the proposed design of a battery cell 2 is schematically shown in Figure 3, wherein Fig. 3A is a cross-sectional cut through the battery cell 2 and Fig. 3B provides a bottom view of the battery cell 2. Again, a Cartesian coordinate system having the axes x, y, and z is depicted in the figure to facilitate the description.

Like the conventional battery cell 1 depicted in Fig. 2, the battery cell 2 of Fig. 3 according to an example of the proposed design for a battery cell comprises a housing 10 with a prismatic (cuboid) shape. Specifically, the housing 10 has an upper side 12a facing against the x-direction and a bottom side 12b facing into the x-direction, a first lateral side 18a facing into the y-direction and a second lateral side 18b facing against the y-direction, as well as the front side 16a facing into the z-direction and the rear side 16b facing against the z-direction. In particular, the battery cell 2 may be configured to be mounted into a vehicle such that the bottom side 12b of housing 10 faces the bottom side of the vehicle. Then, if the vehicle is positioned on a plane perpendicular to the direction of gravity, the bottom side 12b faces into the direction of the gravitational force. Also, a first terminal T₁ and the second terminal T₂ is arranged on the housing 10 as well as a venting valve 22 on one of its side faces, wherein the venting valve 22 is configured for being in the open state or switching into the open state, if the pressure inside the battery cell exceeds a certain predefined value, and to remain or switch into the closed state otherwise. In the open state, the venting valve 22 provides a vent opening O2 through the housing 10 of the battery cell 2 of Fig. 3. Furthermore, inside the battery cell housing 10, an electrode stack 8 is accommodated, which is electrically connected, like in case of the conventional battery cell 1 of Figs. 1 and 2, via a first electric connection C₁ with the first terminal T₁ and via a second electric connection C₂ with the second terminal T₂. So far, the general functions, effects, and interplay of the above-mentioned components of the battery cell 2 essentially corresponds to the functions, effects, and interplay of the corresponding components of battery cell 1 of Figs. 1 and 2. Thus, as to the detailed description of the general functions, effects, and interplay of these components, it is referred to the above explanations in the context of Figs. 1 and 2 for the sake of brevity.

However, unlike to the assembly of the conventional battery cell 1 of Fig. 2, the terminals T₁, T₂ of battery cell 2 according to Fig. 3 are not arranged on the same side face of the housing as the venting valve. Rather, as can be seen in Fig. 3, the terminals T₁, T₂ of battery cell 2 are placed on the first lateral side 18a and the second lateral side 18b, respectively. Accordingly, the first and second lateral sides 18a, 18b may also be referred to as "terminal sides" in the following. When the battery cell 2 is mounted into a battery module (as will be discussed later with reference to Fig. 5), the electrical components (e. g., busbars) can thus also be placed adjacent to the first and second lateral sides 18a, 18b.

The battery cell 2 is configured for being used, within a battery module, in the orientation in space as illustrated in Fig. 3A, wherein it is assumed that the x-axis is directed downwards, i. e., parallel to the gravitational force. Accordingly, battery cell 2 is built differently from the conventional battery cell 1 of Fig. 2 in that - at least with regard to the functions of the cooling and the venting - the roles of the upper side 12a and the bottom side 12b are reversed in comparison to the conventional battery cell 1. Specifically, according to the design of battery cell 2, the upper side 12a is configured as a cooling side instead of the bottom side 12b as in case of the conventional battery cell 1. Further, the venting valve 22 is arranged in the bottom side 12b of the housing 10 of battery cell 2, unlike to the venting valve 20 of conventional battery cell 1, which is positioned in the upper side 12a of battery cell 1 (see Figs. 1 and 2).

Accordingly, the bottom side 12b of battery cell 2 may also be referred to as "venting side" in the following.

The effect of the above-described arrangement of the venting valve 22 in the battery cell 2 of Fig. 3 is that in case of a thermal runaway (i. e., in a state, wherein the venting valve 22 has been switched into the open state due to the overpressure inside the battery cell 2), any material to be ejected from the inside of battery cell 2 or any material, which has become detached from its original positions within the housing 10 due to melting processes, is not only conveyed to the outside of the battery cell 2 via the venting opening O2 due to the overpressure inside the battery cell 2, but is additionally caused to fall or stream through the venting opening O2 to the outside of the battery cell 2 by the gravitational force, which acts on any detached material inside the battery cell 2 in the direction of the x-axis (when assuming that the battery cell 2 is oriented such that the x-axis corresponds to the direction of the gravitational force; see above).

The efficiency of the removal of any loosened or detached material from the inside of the housing 10 through the vent opening O2 provided by the opened venting valve 22 is further improved by the increased area of the vent opening O2 of the battery cell 2 according to Fig. 3, which is considerably enlarged in comparison to the vent opening O1 of the conventional battery cell 1 of Figs. 1 and 2. In fact, the vent opening O2 of battery cell 2 uses at least 80% of the area of the bottom side 12b with respect to the y-direction and almost 100% (e. g., 98%) of the area of the bottom side 12b with respect to the z-direction. This is made possible in that the terminals have been removed from that side face of the housing 10, on which the venting valve 22 is positioned, and have instead been placed onto the first and second lateral sides 18a, 18b as described above. Thus, the area of the vent opening O2 provided by the venting valve 22 of battery cell 2 amounts to a multiplicity of the area of the vent opening O1 provided by the venting valve 20 of the conventional battery cell 1 (e. g., at least 10 times the area; compare the length Δy_{O2} and the width Δz_{O2} of the vent opening O2 of battery cell 2 with the corresponding length Δy_{O1} and the width Δz_{O1} of the vent opening O2 of conventional battery cell 1).

Consequently, not only small parts of molten and/or detached material, which can be entrained with the vent gas streaming through the vent valve 22, are ejected out of the battery cell 2, but also larger pieces of material up to the complete electrode assembly inside battery cell 2 (depending on the special embodiment and in particular depending on the specific dimensions of the area of the vent opening O2). For example, at least parts of the electrode stack 8 (jelly roll) being larger than 50% of the size of the electrode stack in the original state (as sketched in Fig. 3) with regard to the y-direction can be ejected to the outside of the battery cell 2 via the venting opening O2. As a result, a larger amount of hot (molten and solid) material is removed from the battery cell 2 when being affected by the thermal runaway in comparison to a situation, wherein conventional battery cell 1 is used instead. Also, the hot material is removed faster from the battery cell 2 when being affected by a thermal runaway in comparison to the use of a conventional battery cell. Thus, the process of the thermal runaway within the battery cell 2 according to Fig. 3 will be stopped automatically due to the afore-described features of the design of battery cell 2.

In the embodiment of the battery cell 2 shown in Fig. 3A and 3B, the battery cell 2 can be mechanically supported, when being mounted into a battery module, on supports 14a, 14b at its bottom short side corners. Thus, in the shown embodiment, the area of the bottom side 12b that can be used for the vent opening O2 is confined, with regard to the y-direction, by the areas provided for mechanically supporting the battery cell 2. However, in other embodiments, mounting means may be alternatively provided on the first and second lateral sides 18a, 18b besides the terminals T₁, T₂ such that almost the entire length (along the y-direction) of the bottom side 12b is employable for the vent opening O2.

As in case of the conventional battery cell 1 shown in Fig. 2A and 2B, also battery cell 2 can be cooled by cooling means of the cooling plate 120. However, since the bottom side 12b of battery cell 2 has already been used for the venting valve 22 and the vent opening O2, the bottom side 12b is no longer available for cooling. Hence, the upper side 12a is configured as a cooling side in case of battery cell 2. This is no disadvantage in comparison to the arrangement in the conventional battery cell 1, as the area of the upper side 12a corresponds to the area of the bottom side 12b in the present example. The mechanical and thermal connection of the upper side 12a of battery cell 2 to the cooling plate 120 may be completely similar to the mechanical and thermal connection of the bottom side 12b of conventional battery cell 1 to the respective cooling plate, as described above with reference to Fig. 2. In particular, the upper side 12a of battery cell 2 may be glued to the cooling plate 120 using an adhesive layer 122 of thermal interface material (TIM).

The proposed design of the battery cell as exemplary described in the foregoing with reference to Fig. 3 unfolds its full effect, when a plurality of battery cells designed like the battery cell 2 of Fig. 3 are used in a battery module, and in particular when being assembled to a battery cell stack used in a battery module. This is now explained in more detail with reference to Fig. 5.

Figure 5 provides a rather schematic cut through a battery module 160 comprising a battery cell stack 200. Apart from the battery cell stack 200, the battery module 160 may comprise further battery cell stacks, which are, however, not shown in the schematic illustration of Fig. 5. The battery cell stack 200 and, if applicable, the further battery cell stacks (not shown) are accommodated within a case 110 of the battery module 160. Further, the direction of the x-axis of the coordinate system also provided in Fig. 5 shall correspond to the direction of the gravitational force, i. e., in other words, the x-axis points downwards.

The battery cell stack 200 comprises a plurality of battery cells 2ᵢ₋₂, 2ᵢ₋₁, 2ᵢ, 2ᵢ₊₁, 2ᵢ₊₂ consecutively stacked together along the z-direction. Each of the battery cells is assembled like the battery cell 2 described above in detail with reference to Fig. 3. Similar to the battery cell stack 100 employed in the conventional battery module 150 illustrated in Fig. 4, the battery cell stack 200 may comprise more battery cells than depicted in Fig. 5, i. e., the stack of battery cells 2ᵢ₋₂, 2ᵢ₋₁, 2ᵢ, 2ᵢ₊₁, and 2ᵢ₊₂ may be continued, with regard to the orientation of Fig. 5, to the left and/or the right by a plurality of further battery cells (not shown), which may also be shaped like the battery cell 2 of Fig. 3. The terminals of the various battery cells comprised in battery cell stack 200 (see, e. g., terminals T₁ and T₂ in Fig. 3) may be electrically interconnected to each other in a suitable manner by busbars (not shown). Due to the terminals T₁, T₂ being placed on the first and second lateral sides 18a, 18b of the battery cells 2ᵢ₋₂, 2ᵢ₋₁, 2ᵢ, 2ᵢ₊₁, 2ᵢ₊₂, the means for electrically interconnecting the terminals (e. g., busbars) may thus also be positioned along the first and second lateral sides 18a, 18b of the battery cells 2ᵢ₋₂, 2ᵢ₋₁, 2ᵢ, 2ᵢ₊₁, 2ᵢ₊₂.

The directions of the axes of the coordinate system depicted in Fig. 3 and the directions of the respective axis of the coordinate system shown in Fig. 5 shall correspond to each other. Hence, each of the battery cells 2ᵢ₋₂, 2ᵢ₋₁, 2ᵢ, 2ᵢ₊₁, and 2ᵢ₊₂ is mounted such within the battery module 160 that its respective upper side 12a faces upwards, i. e., against the x-direction, and its respective bottom side 12b faces downwards, i. e., into the x-direction.

As can be seen in each of Figs. 5A - 5C, each of the battery cells 2ᵢ₋₂, 2ᵢ₋₁, 2ᵢ, 2ᵢ₊₁, 2ᵢ₊₂ of battery cell stack 200 is connected, with its respective upper side 12a, to a cooling plate 120. Specifically, the upper sides may each be glued to the cooling plate 120 using an adhesive layer of thermal interface material (TIM) as described above with reference to Fig. 3. The cooling plate 120 may be cooled by a cooling means (not shown), e. g., a cooling channel arranged above the cooling plate 120 and being in thermal contact with the cooling plate 120. Then, the cooling plate 120 can be cooled by guiding cooling liquid (coolant) through the cooling channel. Also, the temperature of the battery cells 2ᵢ₋₂, 2ᵢ₋₁, 2ᵢ, 2ᵢ₊₁, 2ᵢ₊₂ may be supervised by suitable means such as temperature sensors connected to a BMS / BMU.

Fig. 5A shows the battery module 160 in a normal working state, i. e., in a state, wherein none of the battery cells 2ᵢ₋₂, 2ᵢ₋₁, 2ᵢ, 2ᵢ₊₁, 2ᵢ₊₂ undergoes a thermal event such as a thermal runaway. However, when a thermal event starts in one of the battery cells, for example, in battery cell 2ᵢ positioned in the center of the depicted portion of the battery cell stack 200, heat is generated such that the temperature of the electrolyte solution within the battery cell 1ᵢ rises, which initially sets in motion similar processes as described above with reference to Fig. 4A. Specifically, the venting valve 22 of the battery cell 2ᵢ switches into an open state due to the overpressure generated within the housing of battery cell 2ᵢ and provides a vent opening O2 such that vent gas (vaporized electrolyte solution) can escape through the vent opening O2 to the outside of the housing 10.

As the thermal event proceeds and the temperature further rises such that not only the electrolyte evaporates, but also the electrode assembly within the battery cell 2ᵢ (in particular, the electrode stack 8 and/or the electric connections C₁, C₂) or at least parts of the electrode assembly become molten, solid particles (e. g., graphite or copper particles) as well as molten metallic material will be ejected through the vent opening O2 to the outside of the battery cell 2ᵢ. This is indicated in Fig. 5B by the two arrows pointing obliquely downwards from battery cell 2ᵢ.

However, as the vent opening O2 of battery cell 2ᵢ opens downwards (i. e., into the direction of the gravitational force, in contrast to battery cell 1ᵢ in Fig. 4B, which is arranged on the top side of battery cell 1ᵢ; see Figs. 1 and 2), the efficiency of the ejecting process is amplified (in comparison to the corresponding situation in the conventional battery module 150; see Fig. 4B) due to the gravitational force additionally acting on any loosened or detached material from the inside of the housing 10 as well as by the considerable enlarged area of the vent opening O2 of battery cell 2ᵢ (in comparison to the area of the venting opening O1 of the conventional battery cell 1ᵢ). Hence, the ejection process is faster, and also larger parts of the electrode assembly of battery cell 2ᵢ fall down (into the direction of the x-axis) through the vent opening O2 in comparison to the corresponding situation in the conventional battery module 150 (see the above explanations as to Fig. 3).

After being removed from the battery cell 2ᵢ, the ejected hot (solid or molten liquid) material **parts 80 of** the original electrode assembly of battery cell 2ᵢ are collected beneath the venting side 12b of battery cell 2ᵢ by a trough 130, as schematically illustrated in Fig. 5C. The trough 130 is arranged beneath the battery cells 2ᵢ₋₂, 2ᵢ₋₁, 2ᵢ, 2ᵢ₊₁, 2ᵢ₊₂ and spaced apart from the venting sides of the battery cells 2ᵢ₋₂, 2ᵢ₋₁, 2ᵢ, 2ᵢ₊₁, 2ᵢ₊₂ by a distance Δ. In other words, the trough 130 forms a sufficiently sized void container located below the battery cells 2ᵢ₋₂, 2ᵢ₋₁, 2ᵢ, 2ᵢ₊₁, 2ᵢ₊₂ of the battery cell stack 200 to safely catch the ejected hot material parts 80. The trough 130 may be a collection plate. The trough 130 may be a bottom side of the case 110 of the battery module 160, which may in turn be configured as a bollard protection plate.

Hence, after leaving the cell can, the solid and molten parts of the ejecta are caught by the trough, where they can spread out and cool down. Thus, in contrast to the situation in the conventional battery module 150 illustrated in Fig. 4C, the hot material 80 is no longer in thermal contact with the battery cells 2ᵢ₋₁ and 2ᵢ₊₁ placed neighbored to battery cell 2ᵢ affected by the thermal runaway, nor can the hot material 80 come in contact with terminals T₁, T₂ of the remaining battery cells 2ᵢ₋₂, 2ᵢ₋₁, 2ᵢ₊₁, 2ᵢ₊₂ provided on the first and second lateral sides 18a, 18b of the battery cells 2ᵢ₋₂, 2ᵢ₋₁, 2ᵢ, 2ᵢ₊₁, 2ᵢ₊₂ or the electric interconnections between these connectors (e. g., busbars; not shown), which are also positioned along the first and second lateral sides 18a, 18b of the battery cells 2ᵢ₋₂, 2ᵢ₋₁, 2ᵢ, 2ᵢ₊₁, 2ᵢ₊₂.

Consequently, due to the design of the battery cells 2ᵢ₋₂, 2ᵢ₋₁, 2ᵢ, 2ᵢ₊₁, 2ᵢ₊₂ as well as of the battery module 160, the process of a thermal runaway is finally stopped inside the battery cell 2ᵢ and a propagation of the thermal runaway to other battery cells 2ᵢ₋₂, 2ᵢ₋₁, 2ᵢ₊₁, 2ᵢ₊₂ is prevented. A transfer of residual heat from battery cell 2ᵢ to the adjacent battery cells 2ᵢ₋₁ and 2ᵢ₊₁ is irrelevant, as the respective heat energy it is not sufficient to initiate a further thermal runaway in the adjacent battery cells 2ᵢ₋₁ and 2ᵢ₊₁.

Since, as described before, the venting valves 22 of each of the battery cells 2ᵢ₋₂, 2ᵢ₋₁, 2ᵢ, 2ᵢ₊₁, 2ᵢ₊₂ of the battery cell stack 200 are placed at the bottom side 12b of their respective housings 10, the cooling plate 120 is located on the upper sides 12a of battery cells 2ᵢ₋₂, 2ᵢ₋₁, 2ᵢ, 2ᵢ₊₁, 2ᵢ₊₂. This provides at least the same cooling effect as in case of the conventional battery module 150, where the cooling plate 120 is located on the bottom sides 12b of the respective battery cells 1ᵢ₋₂, 1ᵢ₋₁, 1ᵢ, 1ᵢ₊₁, 1ᵢ₊₂ (see Fig. 4). In fact, placing the cooling plate 120 on the upper sides 12a of battery cells 2ᵢ₋₂, 2ᵢ₋₁, 2ᵢ, 2ᵢ₊₁, 2ᵢ₊₂ has the advantage that heat exchange between the cooling plate 120 is located on the upper sides 12a of battery cells 2ᵢ₋₂, 2ᵢ₋₁, 2ᵢ, 2ᵢ₊₁, 2ᵢ₊₂ and the cooling plate 120 occurs at a hotter region of the battery cells 2ᵢ₋₂, 2ᵢ₋₁, 2ᵢ, 2ᵢ₊₁, 2ᵢ₊₂ during use and has thus an improved efficiency, since due to the usual processes of heat transfer (in particular, convective transfer of heat, e. g., by the electrolytes in the battery cell), upper regions tend to have a higher temperature than lower regions within a battery cell.

The proposed design for a battery cell and a battery module as explained above with reference to Figs. 3 and 5 may be briefly summarized as follows: The housing of the proposed battery cell (see Fig. 3) is built differently from that of a conventional battery cell as shown, e. g., in Figs. 1 and 2. Specifically, its terminals are located on either lateral side of the battery cell, and the electrical components (e. g., busbars; not shown) may be also placed there. A cooling plate can be placed on the top side of the battery cell. The venting valve is placed at the bottom side. The battery cells may be supported on their corners (edges formed by their respective lateral and bottom sides), and a sufficiently sized void container (trough) is located below them.

In case of a thermal runaway, as pressure builds up within the affected battery cell, the respective venting valve opens and gas escapes. Due to gravity and internal pressure, any molten material or particle ejecta have to immediately leave downwards. After leaving the battery cell housing, the ejecta are caught by the trough, where the ejecta can spread out and cool down. The hot material is no longer in contact with neighboring battery cells, nor can it come in contact with electrical connectors.

This way it is ensured that thermal propagation is not possible.

Hence, advantages of the proposed approach according to the first and second aspect and/or embodiments of the first and second aspect are in particular as follows:
- The same cooling strategy can be used because the surface area available for cooling remains the same.
- 1 cooling plate is sufficient
- The venting opening on the cell can be significantly enlarged, because the terminals are now not located on the same surface
- A busbar design and complexity is only marginally affected.

### Reference signs

- 1: battery cell (state of the art)
- 1ᵢ₋₂, 1ᵢ₋₁, 1ᵢ, 1ᵢ₊₁, 1ᵢ₊₂: battery cells (state of the art)
- 2: battery cell
- 2ᵢ₋₂, 2ᵢ₋₁, 2ᵢ, 2ᵢ₊₁, 2ᵢ₊₂: battery cells

- 10: housing
- 12a: upper side
- 12b: bottom side
- 14a, 14b: support
- 16a: front side
- 16b: rear side
- 18a: first lateral side
- 18b: second lateral side
- 20: venting valve (state of the art)
- 22: venting valve
- 80: ejected hot material parts

- 100: battery cell stack (state of the art)
- 110: case of battery module
- 120: cooling plate
- 122: adhesive layer of thermal interface material (TIM)
- 130: trough
- 150: battery module (state of the art)
- 160: battery module
- 200: battery cell stack

- C₁: first electric connection
- C₂: second electric connection
- Δ: distance
- Δy_{O1}, Δz_{O1}: dimensions of the vent opening (state of the art)
- Δy_{O2}, Δz_{O2}: dimensions of the vent opening
- O1: vent opening (state of the art)
- O2: vent opening
- T₁: first terminal
- T₂: second terminal
- x, y, z: axes of a Cartesian coordinate system

## Claims

1. A battery cell (2) comprising:
a housing (10) having a prismatic shape;
an electrode assembly (8, C₁, C₂) fixedly arranged inside the housing (10);
wherein the housing (10) comprises a venting side (12b) and at least one terminal side (18a, 18b) being different from the venting side (12b);
wherein at least one terminal (T₁, T₂) is arranged on each of the terminal sides (18a, 18b);
wherein the venting side (12b) comprises venting valve (22);
wherein the venting valve (22) is configured for being in a closed state and in an open state and is further configured for switching between the closed state and the open state;
wherein the venting valve (22), when being in the open state, provides a vent opening (O2) in the venting side (12b), the vent opening (O2) extending over at least 70 % of the area of the venting side (12b);
wherein the electrode assembly (8, C₁, C₂) is fixed inside the battery cell (2) by an anchorage; and
wherein the electrode assembly (8, C₁, C₂) is configured for sliding or being slid through the venting opening (O2), when the venting valve (22) is in an open state and the electrode assembly (8, C₁, C₂) has been detached from the anchorage.

2. The battery cell (2) according to claim 1, wherein the venting side (12b) is configured to be a bottom side of the battery cell (2).

3. The battery cell (2) according to claim 1 or 2, wherein the vent opening (O2) is configured for letting pass molten material and particles from the inside of the battery cell (2) to the outside of the battery cell (2).

4. The battery cell (2) according to any one of claims 1 to 3, wherein the vent opening (O2) is configured for letting pass parts of the electrode assembly (8, C₁, C₂) mechanically detached from the inside of the battery cell (2) to the outside of the battery cell (2).

5. The battery cell (2) according to any one of claims 1 to 4, wherein the venting valve (22), when being in an open state, provides a venting opening (O2) that opens at least 80% or preferably at least 90% of the area of the venting side (12b).

6. The battery cell (2) according to any one of claims 1 to 4, wherein the venting valve (22), when being in an open state, provides a venting opening (O2) that opens the venting side (12b) to 100% or at least between 98% and 100%.

7. The battery cell (2) according to any one of claims 1 to 6, wherein the housing (10) comprises two terminal sides (18a, 18b) being arranged as opposite sides of the housing (10).

8. The battery cell (2) according to any one of claims 1 to 7, wherein one side of the housing is a cooling side (12a) being configured to be cooled by a cooling means (120).

9. A battery module (160) comprising:
a plurality of battery cells (2ᵢ₋₂, 2ᵢ₋₁, 2ᵢ, 2ᵢ₊₁, 2ᵢ₊₂), each of the battery cells (2ᵢ₋₂, 2ᵢ₋₁, 2ᵢ, 2ᵢ₊₁, 2ᵢ₊₂) being a battery cell (2) according to any one of claims 1 to 8,
wherein, with regard to a first predefined direction (x), each battery cell (2ᵢ₋₂, 2ᵢ₋₁, 2ᵢ, 2ᵢ₊₁, 2ᵢ₊₂) is arranged such that the venting side (12b) of the battery cell (2ᵢ₋₂, 2ᵢ₋₁, 2ᵢ, 2ᵢ₊₁, 2ᵢ₊₂) faces into the first predefined direction (x).

10. The battery module (160) according to claim 9,
further comprising one or more troughs (130),
wherein, for each of the battery cells (2ᵢ₋₂, 2ᵢ₋₁, 2ᵢ, 2ᵢ₊₁, 2ᵢ₊₂), one of the one or more troughs (130) extends parallel to the venting side (12b) of the battery cell (2), is positioned in front of the venting side (12b) of the battery cell (2ᵢ₋₂, 2ᵢ₋₁, 2ᵢ, 2ᵢ₊₁, 2ᵢ₊₂), and is arranged spaced apart, with regard to the first predefined direction (x), from the venting side (12b) of the battery cell (2ᵢ₋₂, 2ᵢ₋₁, 2ᵢ, 2ᵢ₊₁, 2ᵢ₊₂).

11. The battery module (160) according to claim 10, wherein each of the troughs (130) is realized by a bollard protection plate.

12. The battery module (160) according to any one of claims 9 to 10, as far as depending on claim 8,
further comprising a cooling means (120),
wherein the cooling means (120) is thermally connected to the cooling side (12a) of each of the battery cells (2ᵢ₋₂, 2ᵢ₋₁, 2ᵢ, 2ᵢ₊₁, 2ᵢ₊₂); and
wherein with regard to a second predefined direction having an orientation different from the orientation of the first predefined direction (x), the cooling side (12a) of each of the battery cells (2ᵢ₋₂, 2ᵢ₋₁, 2ᵢ, 2ᵢ₊₁, 2ᵢ₊₂) faces into the second predefined direction.

13. A battery system comprising:
one or more battery cells (2) according to any one of claims 1 to 8; and/or
one or more battery modules (160) according to any one of claims 9 to 12.

14. A vehicle comprising:
at least one battery module (160) according to any one of claims 9 to 12; and/or
at least one battery system according to claim 13.

## Patentansprüche

1. Batteriezelle (2), umfassend:
ein Gehäuse (10) mit einer prismatischen Form;
eine Elektrodenanordnung (8, C₁, C₂), die fest im Inneren des Gehäuses (10)
angeordnet ist;
wobei das Gehäuse (10) eine Lüftungsseite (12b) und mindestens eine Klemmenseite (18a, 18b) umfasst, die sich von der Lüftungsseite (12b) unterscheidet;
wobei an jeder der Klemmenseiten (18a, 18b) mindestens eine Klemme (T₁, T₂) angeordnet ist;
wobei die Lüftungsseite (12b) ein Lüftungsventil (22) umfasst;
wobei das Lüftungsventil (22) konfiguriert ist, um sich in einem geschlossenen Zustand und einem offenen Zustand zu befinden, und ferner konfiguriert ist, um zwischen dem geschlossenen Zustand und dem offenen Zustand umzuschalten;
wobei das Lüftungsventil (22), wenn es sich im offenen Zustand befindet, eine Lüftungsöffnung (O2) in der Lüftungsseite (12b) bereitstellt, wobei sich die Lüftungsöffnung (O2) über mindestens 70 % der Fläche der Lüftungsseite (12b) erstreckt;
wobei die Elektrodenanordnung (8, C₁, C₂) im Inneren der Batteriezelle (2) durch eine Verankerung befestigt ist; und
wobei die Elektrodenanordnung (8, C₁, C₂) konfiguriert ist, um durch die Lüftungsöffnung (O2) zu gleiten oder geschoben zu werden, wenn sich das Lüftungsventil (22) in einem offenen Zustand befindet und die Elektrodenanordnung (8, C₁, C₂) von der Verankerung gelöst wurde.

2. Batteriezelle (2) nach Anspruch 1, wobei die Lüftungsseite (12b) so konfiguriert ist, dass sie eine Unterseite der Batteriezelle (2) ist.

3. Batteriezelle (2) nach Anspruch 1 oder 2, wobei die Lüftungsöffnung (O2) so konfiguriert ist, dass sie geschmolzenes Material und Partikel aus dem Inneren der Batteriezelle (2) zur Außenseite der Batteriezelle (2) durchlässt.

4. Batteriezelle (2) nach einem der Ansprüche 1 bis 3, wobei die Lüftungsöffnung (O2) konfiguriert ist, um Teile der Elektrodenanordnung (8, C₁, C₂), die mechanisch vom Inneren der Batteriezelle (2) gelöst sind, zur Außenseite der Batteriezelle (2) durchzulassen.

5. Batteriezelle (2) nach einem der Ansprüche 1 bis 4, wobei das Lüftungsventil (22), wenn es sich im offenen Zustand befindet, eine Lüftungsöffnung (O2) bereitstellt, die mindestens 80 % oder vorzugsweise mindestens 90 % der Fläche der Lüftungsseite (12b) öffnet.

6. Batteriezelle (2) nach einem der Ansprüche 1 bis 4, wobei das Lüftungsventil (22), wenn es sich im offenen Zustand befindet, eine Lüftungsöffnung (O2) bereitstellt, die die Lüftungsseite (12b) zu 100 % oder zumindest zwischen 98 % und 100 % öffnet.

7. Batteriezelle (2) nach einem der Ansprüche 1 bis 6, wobei das Gehäuse (10) zwei Klemmenseiten (18a, 18b) umfasst, die als gegenüberliegende Seiten des Gehäuses (10) angeordnet sind.

8. Batteriezelle (2) nach einem der Ansprüche 1 bis 7, wobei eine Seite des Gehäuses eine Kühlseite (12a) ist, die so konfiguriert ist, dass sie durch eine Kühleinrichtung (120) gekühlt wird.

9. Batteriemodul (160), umfassend:
eine Vielzahl von Batteriezellen (2ᵢ₋₂, 2ᵢ₋₁, 2ᵢ, 2ᵢ₊₁, 2ᵢ₊₂), wobei jede der Batteriezellen (2ᵢ₋₂, 2ᵢ₋₁, 2ᵢ, 2ᵢ₊₁, 2ᵢ₊₂) eine Batteriezelle (2) nach einem der Ansprüche 1 bis 8 ist,
wobei, in Bezug auf eine erste vordefinierte Richtung (x), jede Batteriezelle (2ᵢ₋₂, 2ᵢ₋₁, 2ᵢ, 2ᵢ₊₁, 2ᵢ₊₂) so angeordnet ist, dass die Lüftungsseite (12b) der Batteriezelle (2ᵢ₋₂, 2ᵢ₋₁, 2ᵢ, 2ᵢ₊₁, 2ᵢ₊₂) in die erste vordefinierte Richtung (x) weist.

10. Batteriemodul (160) nach Anspruch 9,
ferner umfassend eine oder mehrere Mulden (130),
wobei sich für jede der Batteriezellen (2ᵢ₋₂, 2ᵢ₋₁, 2ᵢ, 2ᵢ₊₁, 2ᵢ₊₂) eine der einen oder der mehreren Mulden (130) parallel zur Lüftungsseite (12b) der Batteriezelle (2) erstreckt, vor der Lüftungsseite (12b) der Batteriezelle (2ᵢ₋₂, 2ᵢ₋₁, 2ᵢ, 2ᵢ₊₁, 2ᵢ₊₂) positioniert ist und in Bezug auf die erste vordefinierte Richtung (x) von der Lüftungsseite (12b) der Batteriezelle (2ᵢ₋₂, 2ᵢ₋₁, 2ᵢ, 2ᵢ₊₁, 2ᵢ₊₂) beabstandet angeordnet ist.

11. Batteriemodul (160) nach Anspruch 10, wobei jede der Mulden (130) durch eine Pollerschutzplatte realisiert ist.

12. Batteriemodul (160) nach einem der Ansprüche 9 bis 10, soweit es von Anspruch 8 abhängt,
ferner umfassend eine Kühleinrichtung (120),
wobei die Kühleinrichtung (120) thermisch mit der Kühlseite (12a) jeder der Batteriezellen (2ᵢ₋₂, 2ᵢ₋₁, 2ᵢ, 2ᵢ₊₁, 2ᵢ₊₂) verbunden ist; und
wobei in Bezug auf eine zweite vordefinierte Richtung mit einer Orientierung, die sich von der Orientierung der ersten vordefinierten Richtung (x) unterscheidet, die Kühlseite (12a) jeder der Batteriezellen (2ᵢ₋₂, 2ᵢ₋₁, 2ᵢ, 2ᵢ₊₁, 2ᵢ₊₂) in die zweite vordefinierte Richtung weist.

13. Batteriesystem, umfassend:
eine oder mehrere Batteriezellen (2) nach einem der Ansprüche 1 bis 8; und/oder
ein oder mehrere Batteriemodule (160) nach einem der Ansprüche 9 bis 12.

14. Fahrzeug, umfassend:
mindestens ein Batteriemodul (160) nach einem der Ansprüche 9 bis 12; und/oder
mindestens ein Batteriesystem nach Anspruch 13.

## Revendications

1. Élément de batterie (2), comprenant :
un boîtier (10) ayant une forme prismatique ;
un ensemble d'électrodes (8, C₁, C₂) agencé de manière fixe à l'intérieur du boîtier (10) ;
dans lequel le boîtier (10) comprend un côté d'évacuation (12b) et au moins un côté de borne (18a, 18b) étant différent du côté d'évacuation (12b) ;
dans lequel au moins une borne (T₁, T₂) est agencée sur chacun des côtés de borne (18a, 18b) ;
dans lequel le côté d'évacuation (12b) comprend une vanne d'évacuation (22) ;
dans lequel la vanne d'évacuation (22) est configurée pour être dans un état fermé et dans un état ouvert et est en outre configurée pour basculer entre l'état fermé et l'état ouvert ;
dans lequel la vanne d'évacuation (22), lorsqu'elle est dans l'état ouvert, fournit une ouverture d'évacuation (O2) dans le côté d'évacuation (12b), l'ouverture d'évacuation (O2) s'étendant sur au moins 70 % de la surface du côté d'évacuation (12b) ;
dans lequel l'ensemble d'électrodes (8, C₁, C₂) est fixé à l'intérieur de l'élément de batterie (2) par un ancrage ; et
dans lequel l'ensemble d'électrodes (8, C₁, C₂) est configuré pour glisser ou être glissé à travers l'ouverture d'évacuation (O2), lorsque la vanne d'évacuation (22) est dans un état ouvert et que l'ensemble d'électrodes (8, C₁, C₂) a été détaché de l'ancrage.

2. Élément de batterie (2) selon la revendication 1, dans lequel le côté d'évacuation (12b) est configuré pour être un côté inférieur de l'élément de batterie (2).

3. Élément de batterie (2) selon la revendication 1 ou 2, dans lequel l'ouverture d'évacuation (O2) est configurée pour laisser passer du matériau fondu et des particules à partir de l'intérieur de l'élément de batterie (2) vers l'extérieur de l'élément de batterie (2).

4. Élément de batterie (2) selon l'une quelconque des revendications 1 à 3, dans lequel l'ouverture d'évacuation (O2) est configurée pour laisser passer des parties de l'ensemble d'électrodes (8, C₁, C₂) détachées mécaniquement à partir de l'intérieur de l'élément de batterie (2) vers l'extérieur de l'élément de batterie (2).

5. Élément de batterie (2) selon l'une quelconque des revendications 1 à 4, dans lequel la vanne d'évacuation (22), lorsqu'elle est dans un état ouvert, fournit une ouverture d'évacuation (O2) qui ouvre au moins 80 % ou de préférence au moins 90 % de la surface du côté d'évacuation (12b).

6. Élément de batterie (2) selon l'une quelconque des revendications 1 à 4, dans lequel la vanne d'évacuation (22), lorsqu'elle est dans l'état ouvert, fournit une ouverture d'évacuation (O2) qui ouvre le côté d'évacuation (12b) à 100 % ou au moins entre 98 % et 100 %.

7. Élément de batterie (2) selon l'une quelconque des revendications 1 à 6, dans lequel le boîtier (10) comprend deux côtés de borne (18a, 18b) étant agencés comme côtés opposés du boîtier (10).

8. Élément de batterie (2) selon l'une quelconque des revendications 1 à 7, dans lequel un côté du boîtier est un côté de refroidissement (12a) étant configuré pour être refroidi par un moyen de refroidissement (120).

9. Module de batterie (160) comprenant :
une pluralité d'éléments de batterie (2ᵢ₋₂, 2ᵢ₋₁, 2ᵢ, 2ᵢ₊₁, 2ᵢ₊₂), chacun des éléments de batterie (2ᵢ₋₂, 2ᵢ₋₁, 2ᵢ, 2ᵢ₊₁, 2ᵢ₊₂) étant un élément de batterie (2) selon l'une quelconque des revendications 1 à 8,
dans lequel, par rapport à une première direction prédéfinie (x), chaque élément de batterie (2 ᵢ₋₂, 2 ᵢ₋₁, 2ᵢ, 2 ᵢ₊₁, 2 ᵢ₊₂) est agencé de sorte que le côté d'évacuation (12b) de l'élément de batterie (2 ᵢ₋₂, 2 ᵢ₋₁, 2ᵢ, 2 ᵢ₊₁, 2 ᵢ₊₂) soit orienté dans la première direction prédéfinie (x).

10. Module de batterie (160) selon la revendication 9,
comprenant en outre un ou plusieurs creux (130),
dans lequel, pour chacun des éléments de batterie (2ᵢ₋₂, 2ᵢ₋₁, 2ᵢ, 2ᵢ₊₁, 2ᵢ₊₂), l'un des un ou plusieurs creux (130) s'étend parallèlement au côté d'évacuation (12b) de l'élément de batterie (2), est positionné devant le côté d'évacuation (12b) de l'élément de batterie (2ᵢ₋₂, 2ᵢ₋₁, 2ᵢ, 2ᵢ₊₁, 2ᵢ₊₂), et est agencé espacé, par rapport à la première direction prédéfinie (x), du côté d'évacuation (12b) de l'élément de batterie (2ᵢ₋₂, 2ᵢ₋₁, 2ᵢ, 2ᵢ₊₁, 2ᵢ₊₂).

11. Module de batterie (160) selon la revendication 10, dans lequel chacun des creux (130) est réalisé par une plaque de protection de borne.

12. Module de batterie (160) selon l'une quelconque des revendications 9 à 10, lorsqu'elle dépend de la revendication 8,
comprenant en outre un moyen de refroidissement (120),
dans lequel le moyen de refroidissement (120) est relié thermiquement au côté de refroidissement (12a) de chacun des éléments de batterie (2ᵢ₋₂, 2ᵢ₋₁, 2ᵢ, 2ᵢ₊₁, 2ᵢ₊₂) ; et
dans lequel par rapport à une seconde direction prédéfinie ayant une orientation différente de l'orientation de la première direction prédéfinie (x), le côté de refroidissement (12a) de chacun des éléments de batterie (2ᵢ-₂, 2ᵢ₋₁, 2ᵢ, 2ᵢ₊₁, 2ᵢ₊₂) est orienté dans la seconde direction prédéfinie.

13. Système de batterie comprenant :
un ou plusieurs éléments de batterie (2) selon l'une quelconque des revendications 1 à 8 ; et/ou
un ou plusieurs modules de batterie (160) selon l'une quelconque des revendications 9 à 12.

14. Véhicule comprenant :
au moins un module de batterie (160) selon l'une quelconque des revendications 9 à 12 ; et/ou
au moins un système de batterie selon la revendication 13.
